# EUROPEAN PATENT SPECIFICATION

(11) **EP 0 273 623 B1**
(45) Date of publication and mention of the grant of the patent: **10.05.1995**
(21) Application number: 87310919.3
(22) Date of filing: 11.12.1987
(51) Int. Cl.: G09F 3/04, G09F 3/02, B29C 49/24

(54) **Labels and their application to plastic containers**
Etiketten und deren Anwendung bei Plastikbehältern
Etiquettes et leur application sur des conteneurs en matière plastique

(30) Priority: 29.12.1986 US 947144
(43) Date of publication of application: 06.07.1988
(60) Divisional application: 94202362.3
(73) Proprietor: OWENS-ILLINOIS PLASTIC PRODUCTS INC., Toledo, Ohio 43666 (US)
(72) Inventor: Heider, James Elmer, Toledo Ohio 43614 (US)
(74) Representative: Gore, Peter Manson

(56) References cited:
- EP-A- 0 143 621
- WO-A-86/04547
- AU-A- 32 158
- FR-A- 2 284 531
- US-A- 3 108 850
- US-A- 3 207 822
- US-A- 3 401 475
- US-A- 4 049 147
- US-A- 4 273 816
- US-A- 4 410 582
- US-A- 4 585 679

## Description

This invention relates to labels for plastic containers, to the application of labels to plastic containers, particularly by in-mould labelling during the blow moulding of the container, and to plastic containers having labels applied thereto.

In the use of plastic containers, it becomes necessary to apply labels. it has been found that applying the labels during the moulding process reduces costs of manufacture and produces an attractive container. More specifically, when a hollow parison or preform is expanded against the surface of the mould having a label on a side wall of the mould cavity so that when the plastic is expanded, it causes an adhesive on the label to be heated and thereby adhere the label to the container. One common type of label that is used is a paper label. However, the use of such a label has inherent problems in that when the plastic container cools, the plastic and paper have different rates of shrinkage and, as a result, the paper wrinkles and stresses occur in the adhesive. Another problem with the use of paper labels is that any rejected containers cannot be reprocessed until the paper label is removed. It has therefore been common to discard the entire container or, at most, cut off the neck of the container and discard the remainder.

US-A-4049147 discloses a method of producing a lightweight, strong, uniform, foamed layer containing tubular film with good opacity which can be heat-shrunk onto an annular substrate such as a glass bottle rapidly and uniformly is accomplished by co-extruding a low density polyethylene and a mixture of an ethylene polymer and a blowing agent under particular conditions and causing the blowing agent to decompose thereby foaming the ethylene polymer.

AU-A-32158/71 discloses an apparatus for and a method of placing printed material on an article made of thermoplastic material during its formation by moulding said method comprising the steps of providing a piece of printed thermoplastic film material, placing said piece of film in a predetermined position in a mould cavity and forming the article in the mould cavity at a temperature and with a pressure sufficient to cause the film and the article to fuse together.

US-A- 3108850 and US-A- 3207822 discuss the use of plastic labels without adhesive. US-A-3108850 contemplates the use of an insulator comprising a paper layer or plastic layer between the mould and the plastic parison. The insulating part is connected to the label by either a temporary readily strippable connection for quick removal or a relatively permanent connection so that the insulation remains with the label on the completed container to form the decorated outer surface. US- A- 3 207 822 contemplates a plastic label made of a material similar to that used in making the bottle that becomes bonded to the container by the heat and pressure of blowing the container. US- A- 3 207 822 also contemplates coarsely roughening the surface of the mould to facilitate bonding of the label to the container. As far as is known to the present Applicant, such efforts were not commercially successful and, at the present time, it is believed that adhesive is used in all labels wherein the labels are applied by the in-moulding process.

Accordingly, there is need for providing a blown plastic container which has a label applied by the in-mould labelling process that avoids the use of adhesive; which is low in cost; which results in a container that is readily recyclable; and which produces an attractive appearance offering various aesthetic effects.

According to the present invention there is provided a multilayer label for application to a plastic container by in-mould labelling during the blow moulding of the plastic containers which comprises
a non-cellular layer which is heat bondable at moulding temperature to the outer surface of the plastic container, and
a cellular layer compatible with the inner layer and heat bonded thereto.

Preferably, the cellular layer is an intermediate layer and there is also an outer non-cellular layer compatible with the intermediate cellular layer and heat bonded thereto. For the sake of convenience, the present invention is hereinafter particularly described with reference to this preferred embodiment, but is in no manner limited thereto.

The present invention also provides a plastic container having a multilayer label applied by in-mould labelling during the blow moulding of the plastic container wherein the multilayer label and container are as hereabove defined.

The present invention further provides a method of labelling a plastic container which comprises positioning a multilayer label in a mould cavity, positioning a hot parison at moulding temperature adjacent the cavity, and expanding the parison by fluid pressure against the side wall of the mould to form a container and bond the inner layer of the label to the outer surface of the container, wherein the multilayer label and the container are as hereabove defined.

The cellular and non-cellular layers are usually plastic, particularly comprising olefin polymers. Preferably the container comprises polyethylene.

Desirably, the major portion of the thickness of the label comprises the cellular layer. Preferably the cellular layer has a roughness surface adjacent the inner layer providing paths for the escape of air which could become entrapped between the container and label during moulding.

It is preferred that the non-cellular inner and outer layers, when both are present, are of substantially the same thickness, and also that they are of uniform thickness.

A particular embodiment of the present invention comprises a multilayer label, the inner and outer non-cellular layers having a thickness of about 0.0127 mm (0.5 mils) and the cellular layer has a thickness of about 0.127 mm (5 mils).

For the sake of convenience, the invention will be hereinafter described with particular reference to a three layer label but is in no manner restricted thereto.

The present invention will now be more particularly described with reference to, but is in no manner limited to, the accompanying drawings, in which:-
Fig. 1 is a side elevational view of a plastic container embodying the present invention; and
Fig. 2 is a fragmentary sectional view on an enlarged scale taken along the line 2-2 in Fig. 1.

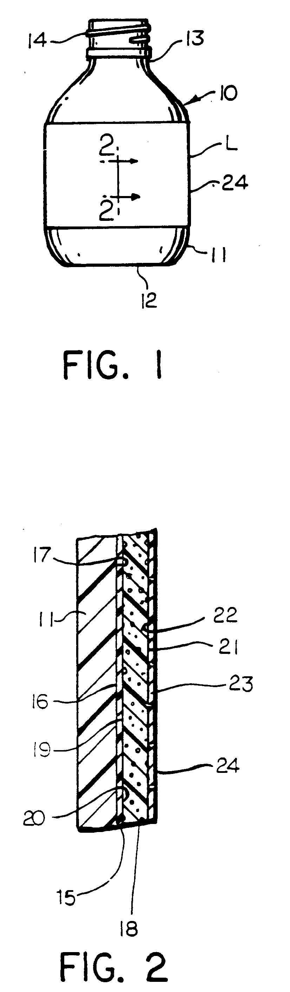

Referring to Figs. 1 and 2, the plastic container embodying the invention is shown as comprising a hollow container 10 having a side wall 11, a bottom wall 12 and a neck 13 with a thread 14 thereon. The container is made by conventional blow moulding techniques wherein a hollow preform or parison at the blow moulding temperature is enclosed in a hollow mould which has a label suitably held against a surface of the cavity of the mould by, for example, vacuum, and the parison is expanded or blown outwardly against the confines of the mould so that the label is bonded to the outer surface of the side wall 11 of the resultant container.

Referring to Fig. 2, the label L comprises an inner non-cellular (preferably plastic) layer 15 which is heat bonded at its inner surface 16 to the outer surface 17 of the wall 11 of the container; an intermediate cellular (preferably plastic) layer 18 which has an inner surface 19 bonded to the outer surface 20 of the inner layer 15 and an outer surface 21 which is heat bonded to the inner surface 22 of an outer non-cellular (preferably plastic) layer 23. The outer surface 24 of the outer layer 23 is formed with suitable indicia such as printing to produce identification as well as desired aesthetic effects.

In order to provide the heat bonding desired to produce the container without the use of adhesives, the various layers must be compatible at their contacting surfaces, that is, they must be heat bondable.

The label L is preferably made by coextrusion, as is well known in the art, during which the preferably uniformly thick layers 15,18 23 are heat bonded to one another.

The resultant label L preferably has a thin inner layer, a relatively thick intermediate layer 18, and a thin outer layer. The inner and outer layers, if made of the same material, should preferably have substantially the same thickness in order that the label will remain flat. If the inner layer is made of a material having lesser mechanical properties, it can be thinner without effecting the curl.

Furthermore, preferably the major portion of the total thickness of the label L comprises the intermediate cellular layer 18. In a typical example, the total thickness of label L might be 0.1524 mm (6 mils) and the inner and outer layers each having a thickness of 0.0127 mm (0.5 mil). In addition, the inner surface 17 of the inner layer 15 preferably is roughened in order to avoid the formation of air bubbles and ensure a proper bond with the wall 11.

In a preferred form, the labels are intended to be applied to containers made of olefin plastics and the various layers of the labels are also made of olefin plastics.

It has been found that when the labels L are applied to plastic containers by conventional in-moulding techniques, the inner layer is reheated and adheres to the bottle surface without the use of adhesives since it is compatible with the container and is very thin resulting in a very low specific heat. However, it is insulated from the bulk or mass of the total label by the foam or cellular layer 18. The low specific heat of the inner layer together with the insulating characteristics of the intermediate layer allows the surface of the inner layer to rapidly heat and melt bond to the outer surface of the container. The cellular intermediate layer also permits the inner surface of the label to reheat to the desired temperature for adhesion without distorting the label.

This may be contrasted to labels that comprise non-cellular cross sections wherein it is very difficult at normal blow moulding temperatures to reheat the inner surface to a point at which complete bonding will occur.

The intermediate cellular foam layer is designed not only to insulate the inner surface of the inner layer but also to provide bulk or stiffness to the label without adding to the weight of the label. The resultant stiffness permits better handling in the mechanisms with are utilized to insert the label within the mould cavity.

Furthermore, the cellular layer produces a fine roughness on the inner surface of the inner layer providing paths for escape of air which could become entrapped between the container and label during the blow moulding.

Tests have shown that complete adhesion between the label and container occur.

The inner layer is preferably of a material which has a melting point like that of the container. The outer layer preferably is made of material that has the desired characteristics for printing and background. Thus, the inner layer may comprise a low density plastic such as, for example, low density polyethylene and the outer layer may comprise a more rigid plastic such as, for example, high density polyethylene or high density polystyrene which have a smooth or matt finish. An overlayer of varnish can be provided over the printing on the outer layer. Alternatively, a metallic film coating can be applied on the outer surface of the outer layer before printing to provide a metallic background for the printing.

Although in the preferred form, the label comprises an inner non-cellular layer, an intermediate cellular layer, and an outer layer, some of the advantages of the invention can be obtained by a label comprising two layers, namely, an inner non-cellular layer and an outer cellular layer.

As indicated above, the polymeric materials respective and independently contemplated for cellular layer 18 and non-cellular layers 15,23 are olefin polymers. Each of these polymeric layers can have as the predominant polymeric moiety a polymer of an olefin, preferably an olefin having 2-4 carbons, or mixtures thereof. For example, the predominant moiety will be a polymer of ethene, propene, butene (particularly butene-1), or mixtures thereof, more commonly referred to as a polymer of ethylene, propylene or butylene. The polymers include homopolymers, copolymers of these olefins with other copolymerizable monoethylenically unsaturated monomers, wherein the olefin in the copolymerization is such that the moiety thereof in the final copolymer, that is the ethylene, propylene or butylene moiety, is at least about 60% by weight, and polymeric blends, or admixtures, wherein the resulting polymeric blend is at least about 60% by weight of a polymerized olefin moiety, e.g., at least about 60% of an ethylene moiety in the blend. The minor amounts, i.e., less than about 40% of the other moiety of material employed, are such as to supplement and compliment the basic properties of the olefin polymer and this applies whether other moieties are introduced by way of a polymer blend, or admixture, or by way of a copolymerized monomer. These other moieties, whether supplied by blending another polymer with a homopolymerized olefin, e.g., homopolymerized ethene, (ethylene homopolymer), or by copolymerization therewith should not be such as to significantly interfere with the foamable, heat sealable, extrudable characteristics of the base olefin polymer and should be compatible, i.e., miscible with it.

Exemplary olefin homopolymers are ethylene, propylene and butylene homopolymers, with the former being especially preferred, and blends of these homopolymers. The terms polyethylene, polypropylene and polybutylene are used herein to include those materials recognized and sold commercially under those names, even though those materials, strictly and technically, may be viewed by some to be a blend, or copolymer, since the material may include small amounts, typically less than about 5%, e.g. 0.5-3% be weight of another polymeric moiety. For example, polyethylene is sold and recognized by that name when in fact it may be produced by co-polymerization with 1-2 percent by weight of hexene, or butadiene, or may, by analysis, show several percent, e.g., 3-5% of vinyl acetate moiety. For practical purposes however these materials consist of polyethylene.

The foregoing description generally describes the composition of the polymeric portion of the cellular layer 18 and non-cellular films 15,23, it being understood that the layers need not be of the same polymeric composition. It will, of course, be apparent that suitable adjuvants can be present in these layers if desired. Thus, for example, in addition to the polymeric material, the respective layers can include, for example, pigments or stabilizers. Generally, excellent results will be obtained be selecting a polymeric composition for cellular layer 18 which has a melt index or melt flow of less than 5, for example, between about 0.1 to 5 most desirebly about 0.2 to 1 and the polymeric material selected from the non-cellular layers 15,23 will have a melt index or melt flow of less than about 10. The preferred material for both the cellular layer 18 and the non-cellular layers 15,23 is polyethylene, which includes low density polyethylene, for example, polyethylene having a density of less than 0.925 grams/cc, generally in the range of about 0.910 to about 0.925, high density polyethylene, for example, that having a density greater than about 0.941, typically about 0.941 to about 0.965, medium density polyethylene, and blends thereof. As regards the cellular layers, the density specified is prior to foaming. The foamed density of cellular layer is about 0.40 to 0.48 grams/cc (25 to 30 lbs/ft.³) and the density of the composite laminate is about 0.56 to 0.64 grams/cc (35 to 40 lbs/ft.³).

While a sheet of stock material of the composite structure for use herein can be formed by various techniques, it is generally preferred to employ extrusion technology. This extrusion technology may take either of two conventional forms, one of which is extrusion coating and the other of which is the use of co-extrusion technology. The latter technique, however, if particularly highly preferred because of the apparent ability to form lower density composite structures. In the co-extrusion technique, while a slit die may be employed, the preferred practice is to employ an extrusion die which is possessed of an annular, circular opening and the composite structure is initially formed as a tubular shape by what is referred to in the art as a "blown bubble" technique. These types of co-extrusion die is set forth in SPE Journal, November 1969, Vol.25, page 20 entitled, "Co-Extrusion of Blown Film Laminates".

In this known co-extrusion technique, the circular opening is fed from two independent extruders and, in this particular instance, the extruder supplying the foamable material, intended to form cellular layer 18, preferably will feed the die so that this material forms the internal portion of the tubular extrusion. The extruder feeding the material intended to form non-cellular layers 15,23 will preferably be fed to the die so as to form the internal and external portions of the tubular shape. The tubular member issuing from the extruder is blown into a bubble by conventional "bubble" forming techniques, including air cooling of the external surface thereof, and is then drawn through the nip of two juxtaposed rollers wherein the tubular member is compressed to form a flattened tube.

Suitable conventional foaming or blowing agents are employed to produce foaming and the cellular structure results, just as the extrudate leaves the die. This flattened tube is then contacted with cutting knives which slit the flattened tubular member along its edges (machine direction) so as to form a sheet or film of substantially uniform width. This sheet or film, which is at this point actually a sheet of two superimposed composite structures, for use herein, is separated into two independent sheets and wound onto independent winding wheels, which provides the stock of the heat shrinkable composite structure for use herein.

Although the invention has been described in connection with the blow moulded containers, it is also applicable to containers made from preforms by differential pressure as, for example, thermoforming of containers from flat or shaped preforms.

## Claims

1. A non-tubular multilayer label (L) for application to a plastic container (10) by in-mould labelling during the blow moulding of the plastic container (10) which comprises an inner non-cellular layer (15) which is heat bondable at moulding temperature to the outer surface of the plastic container, and
a cellular layer (18) compatible with the inner layer and heat bonded thereto;
wherein the cellular layer (18) is an intermediate layer and there is also an outer noncellular layer (23) compatible with the intermediate cellular layer (18) and heat bonded thereto.

2. A multilayer label (L) according to claim 1, wherein the cellular and non-cellular layers (18,15,23) are plastic.

3. A multilayer label (L) according to any of claims 1 or 2, wherein the container (10) and the cellular and non-cellular layers (18,15,23) comprise olefin polymers.

4. A multilayer label (L) according to any of claims 1 to 3, wherein the container (10) and the layers (18,15,23) of the label comprise polyethylene.

5. A multilayer label (L) according to any of claims 1 to 4, wherein the major portion of the thickness of the label comprises the cellular layer (18).

6. A multilayer label (L) according to any of claims 1 to 5, wherein the cellular layer (18) has a roughened surface (20) adjacent the inner layer providing paths for the escape of air which could become entrapped between the container (10) and label (L) during moulding.

7. A multilayer label (L) according to any of claims 1 to 6, wherein the non-cellular inner (15) and outer (23) layers are of substantially the same thickness.

8. A multilayer label (L) according to any of claims 1 to 7, wherein each of the non-cellular inner (15) and outer (23) layers is of uniform thickness.

9. A multilayer label (L) according to any of claims 1 to 8, wherein the inner (15) and outer (23) non-cellular layers having a thickness of about 0.0127mm (0.5mil) and the cellular layer (18) has a thickness of about 0.127mm (5 mils).

10. A plastic container (10) having a multilayer label (L), wherein the multilayer label (L) is as claimed in any of claims 1 to 9.

11. A method of labelling a plastic container (10) which comprises positioning a multilayer label (L) in a mould cavity, positioning a hot parison at moulding temperature adjacent the cavity, and expanding the parison by fluid pressure against the side wall of the mould to form a container (10) and bond the inner layer (15) of the label to the outer surface (16) of the container (10), wherein the multilayer label (L) is as claimed in any of claims 1 to 9.

## Patentansprüche

1. Nichtröhrenförmiges Mehrschichtenetikett (L) zum Aufbringen auf einen Kunststoffbehälter (10) durch Etikettieren im Werkzeug während des Blasformens des Kunststoffbehälters (10), das folgendes umfaßt: Eine innere porenlose Schicht (15), welche bei Preßtemperatur mit der Außenfläche des Kunststoffbehälters wärmebondierbar ist und
eine porige Schicht (18), die mit der Innenschicht kompatibel ist und damit wärmebondiert ist;
worin die porige Schicht (18) eine Zwischenschicht ist und auch eine porenlose Außenschicht (23) vorhanden ist, die mit der porigen Zwischenschicht (18) kompatibel ist und damit wärmebondiert ist.

2. Mehrschichtenetikett (L) nach Anspruch 1, worin die porigen und nichtporigen Schichten (18, 15, 23) Kunststoff sind.

3. Mehrschichtenetikett (L) nach einem der Ansprüche 1 oder 2, worin der Behälter (10) und die porigen und nichtporigen Schichten (18, 15, 23) Olefinpolymere umfassen.

4. Mehrschichtenetikett (L) nach einem der Ansprüche 1 bis 3, worin der Behälter (10) und die Schichten (18, 15, 23) des Etiketts Polyethylen umfassen.

5. Mehrschichtenetikett (L) nach einem der Ansprüche 1 bis 4, worin der Hauptanteil der Dicke des Etiketts die porige Schicht (18) umfaßt.

6. Mehrschichtenetikett (L) nach einem der Ansprüche 1 bis 5, worin die porige Schicht (18) eine aufgerauhte Oberfläche (20) unmittelbar an die Innenschicht angrenzend besitzt, welche Wege für das Entweichen von Luft bereitstellt, die während des Formens zwischen dem Behälter (10) und dem Etikett (L) eingeschlossen werden könnte.

7. Mehrschichtenetikett (L) nach einem der Ansprüche 1 bis 6, worin die nichtporigen Innen- (15) und Außenschichten (23) im wesentlichen die gleiche Dicke aufweisen.

8. Mehrschichtenetikett (L) nach einem der Ansprüche 1 bis 7, worin jede der nichtporigen Innen- (15) und Außenschichten (23) eine gleichmäßige Dicke aufweist.

9. Mehrschichtenetikett (L) nach einem der Ansprüche 1 bis 8, worin die nichtporigen Innen- (15) und Außenschichten (23) eine Dicke von circa 0,0127 mm (0,5 Milli-Inch; 0,5 x 10⁻³ Inch) haben und die porige Schicht (18) eine Dicke von circa 0,127 mm (5 Milli-Inch; 5 x 10⁻³ Inch) aufweist.

10. Kunststoffbehälter (10) mit einem Mehrschichtenetikett (L), worin das Mehrschichtenetikett (L) wie nach einem der Ansprüche 1 bis 9 ist.

11. Verfahren zum Etikettieren eines Kunststoffbehälters (10), welches folgendes umfaßt: Positionieren eines Mehrschichtenetiketts (L) in einen Formenhohlraum, Positionieren eines heißen Vorformlings bei Preßtemperatur unmittelbar neben den Hohlraum und Expandieren des Vorformlings durch Flüssigkeitsdruck gegen die Seitenwand des Formwerkzeugs zum Formen eines Kunststoffbehälters (10) und Bondieren der Innenschicht (15) des Etiketts mit der Außenfläche (16) des Behälters (10), worin das Mehrschichtenetikett (L) wie nach einem der Ansprüche 1 bis 9 ist.

## Revendications

1. Etiquette multicouche non tubulaire (L) pour employer sur un conteneur en matière plastique (10) par un étiquetage inmould lors du soufflage du conteneur en matière plastique (10) qui comporte une couche intérieure non cellulaire (15) qui est collable à chaud à une température de moulage sur la surface externe du conteneur en matière plastique et,
une couche cellulaire (18) compatible avec la couche intérieure et s'y collant à chaud;
dans lequel la couche cellulaire (18) est une couche intermédiaire et se trouve également une couche extérieure non cellulaire (23) compatible avec la couche cellulaire intermédiaire (18) et s'y collant à chaud.

2. Etiquette multicouche (L) selon la revendication 1, dans laquelle les couches cellulaires et non cellulaires (18,15,23) sont réalisées en matière plastique.

3. Etiquette multicouche (L) selon l'une quelconque des revendications 1 ou 2, dans laquelle le conteneur (10) et les couches cellulaires et non cellulaires (18,15, 23) comportent des polymères oléfiniques.

4. Etiquette multicouche (L) selon l'une quelconque des revendications 1 à 3, dans laquelle le conteneur (10) et les couches (18,15,23) de l'étiquette comportent du polyéthylène.

5. Etiquette multicouche (L) selon l'une quelconque des revendications 1 à 4, dans laquelle la majeure partie de l'épaisseur de l'étiquette est constituée de la couche cellulaire (18).

6. Etiquette multicouche (L) selon l'une quelconque des revendications 1 à 5, dans laquelle la couche cellulaire (18) a une surface rugueuse (20) contiguë à la couche intérieure fournissant des chemins pour l'échappement de l'air qui pourrait être occlus entre le conteneur (10) et l'étiquette (L) durant le moulage.

7. Etiquette multicouche (L) selon l'une quelconque des revendications 1 à 6, dans laquelle les couches non cellulaires intérieure (15) et extérieure (23) sont substantiellement de la même épaisseur.

8. Etiquette multicouche (L) selon l'une quelconque des revendications 1 à 7, dans laquelle chacune des couches non cellulaires intérieure (15) et extérieure (23) est d'une épaisseur uniforme.

9. Etiquette multicouche (L) selon l'une quelconque des revendications 1 à 8, dans laquelle les couches non cellulaires intérieure (15) et extérieure (23) ont une épaisseur d'environ 0,0127mm (0,5 mil) et la couche cellulaire (18) a une épaisseur d'environ 0,127mm (5 mils).

10. Conteneur en matière plastique (10) ayant une étiquette multicouche (L), dans lequel l'étiquette multicouche (L) est comme revendiquée dans l'une quelconque des revendications 1 à 9.

11. Procédé d'étiquetage d'un conteneur en matière plastique (10) qui comporte le positionnement d'une étiquette multicouche (L) dans une cavité du creux du moule, positionnant une paraison chaude à une température de moulage contiguë à la cavité, et dilatant la paraison par une pression de fluide contre la paroi latérale du moule pour former un conteneur (10) et coller la couche intérieure (15) de l'étiquette à la surface extérieure (16) du conteneur (10), dans lequel l'étiquette multicouche (L)est comme revendiquée dans l'une quelconque des revendications 1 à 9.
